# EUROPÄISCHE PATENTSCHRIFT

(11) **EP 0 739 756 B1**
(45) Veröffentlichungstag und Bekanntmachung des Hinweises auf die Patenterteilung: **22.03.2000**
(21) Anmeldenummer: 96105830.2
(22) Anmeldetag: 13.04.1996
(51) Int. Cl.: B60B 17/00

(54) **Hohlkassette für einen Faserverbundaufbau einer Radscheibe**
Empty cartridge for a construction of composite materials of a wheel disc
Cassette vide pour une construction en matériaux composites d'un disque de roue

(30) Priorität: 27.04.1995 DE 19515497
(43) Veröffentlichungstag der Anmeldung: 30.10.1996
(73) Patentinhaber: EUROCOPTER DEUTSCHLAND GmbH, D-81663 München (DE)
(72) Erfinder: Bongers, Bernd, 85551 Kirchheim (DE)
(74) Vertreter: Asch, Konrad, Dipl.-Ing.

(56) Entgegenhaltungen:
- EP-A- 0 290 759
- DE-A- 3 814 343
- DE-A- 4 402 985
- DE-C- 3 506 007
- DE-C- 4 336 844
- DE-U- 8 603 942

## Beschreibung

Die Erfindung betrifft eine Hohlkassette gemäß dem Oberbegriff des Patentanspruchs 1.

Mit einer derartigen Hohlkassette läßt sich gemäß der DE-PS 38 14 343 eine Radscheibe für ein Schienenrad bilden, welches die Forderung nach hoher konstruktiver Festigkeit und zugleich geringem Eigengewicht erfüllt. Um diese Hohlkassette für eine kostengünstige automatisierte Großserienfertigung der Radscheibe zu verbessern, wird gemäß der DE-PS 43 36 844 anstelle einer einteiligen, einen in Umfangsrichtung geschlossenen Faserverbund-Querschnitt ermöglichenden Ausbildung die Unterteilung der Hohlkassette in mehrere Faserverbund-Profilstücke bevorzugt. Hierdurch wird jedoch für die Montage der Hohlkassette zur Positionierung der Profilstücke ein Stützkern o. dgl. Montagevorrichtung erforderlich. Solcher Aufwand ist auch bei der in der DE-Patentanmeldung P 44 02 985.3 vorgeschlagenen bloß aus zwei Teilstücken zusammengesetzten Hohlkassette zumindest hinsichtlich des Aufbaus der Radscheibe nicht ausgeschlossen. Die aus ebenen Faserlagen-Zuschnitten vorgefertigten Hohlkassetten-Teilstücke reduzieren zwar den Fertigungsaufwand beträchtlich, jedoch hat naturgemäß der zusammengesetzte Aufbau der Hohlkassette relativ enge Fertigungstoleranzen der einzelnen Kassettenteilstücke und damit erheblichen Prozeßtechnikaufwand zur Folge.

Der Erfindung liegt daher die Aufgabe zugrunde, bei einer Hohlkassette der eingangs genannten Art nicht nur auf einen zusammengesetzten Kassettenaufbau zu verzichten, sondern auch beim Aufbau (Montage) der Radscheibe aus solchen Hohlkassetten ohne besondere Montage- und Positionierungshilfsmittel auszukommen.

Diese Aufgabe ist mit den kennzeichnenden Merkmalen des Patentanspruchs 1 gelöst. Die Hohlkassette kann damit abgesehen davon, daß sie vorteilhafterweise mit Fasergeweben, Fasermatten oder auch multiaxialen Fasergelegen aus einem einzigen Stück zu einer fertigen Baueinheit formbar ist, in einer bestimmten Anzahl zu einer Radscheibe einfach aneinandergereiht werden und somit einen Bausatz für eine Radscheibe oder einen Grundkörper derselben bilden. Beim Aufbau der Radscheibe aus einem solchen Bausatz bedarf es keinerlei Justier- und Fixiermittel für die Hohlkassetten. Eine Stoffschlußverbindung der lediglich zusammengesteckten Hohlkassetten braucht folglich erst am "gesteckten" Radscheibenkörper hergestellt zu werden, wobei das Einbringen von ausreichendem Klebstoff in die Verbindungsfugen zwischen den jeweils gepaarten Steckflächen mit der im Anspruch 2 gekennzeichneten weiteren Ausgestaltung völlig problemfrei ist.

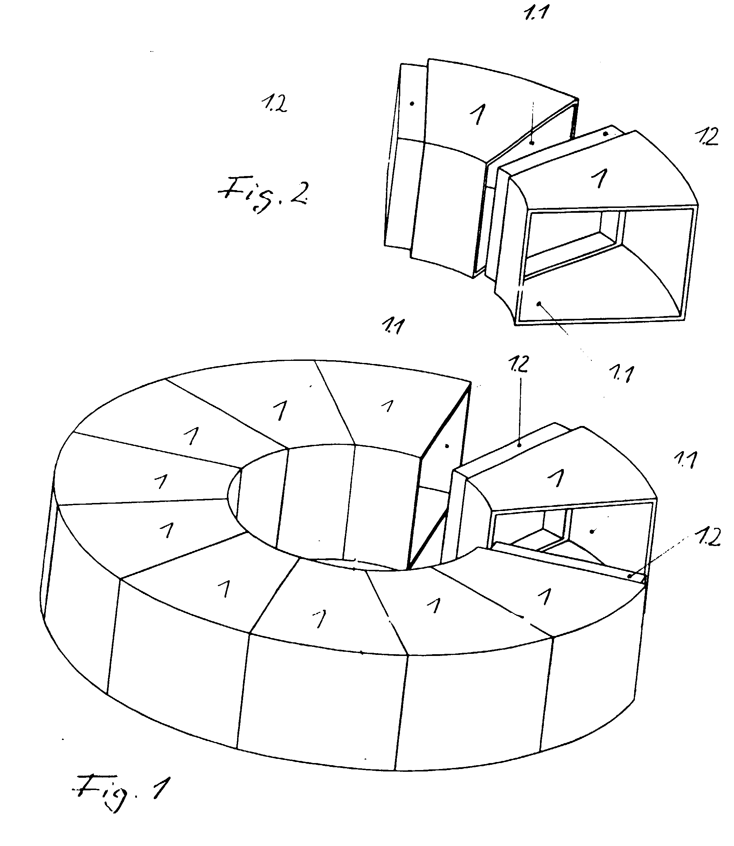

Nachfolgend wird die Erfindung anhand eines Ausführungsbeispieles weiter erläutert. Dabei zeigt die Zeichnung in einer Perspektive gemäß Fig. 1 von einem Grundkörper einer Radscheibe (z.B. zwischen einem Radreifen und einer Radnabe eines Schienenrades) lediglich während des Aufbaus (Montage) Hohlkassetten 1 aus Kunststoff entsprechend dem in den eingangs genannten Druckschriften genannten Faserverbundmaterial. Gemäß Fig. 2 sind die Hohlkassetten 1 baugleich, wobei sie in Scheibenumfangsrichtung die Querschnittsform eines Kreissektors aufweisen. Sobald die Hohlkassetten 1 (und die weiteren nicht dargestellten) jeweils zu einer Struktureinheit in der dargestellten Form gestaltet und ausgehärtet, also formstabil sind, werden sie zur Bildung des Radscheiben-Grundkörpers (gemäß Fig. 1) aneinandergereiht. Hierbei wird bereits Formschluß der Hohlkassetten miteinander erreicht, weil die einzelne formstabile Hohlkassette mit den beiderseits anzuschließenden baugleichen Hohlkassetten einfach zusammensteckbar ist. Hierzu ist jede Hohlkassette 1 an ihrer einen Anschlußseite offen ausgebildet und an ihrer anderen geschlossenen Anschlußseite mit einer in diese Kassettenöffnung 1.1 formschlüssig passenden Profileinengung 1.2 versehen. Der Einfachheit halber wird man durch Zusammenstecken von Hohlkassetten 1 zunächst zwei Halbprofilscheiben des Radscheiben-Grundkörpers gestalten, um dann durch Zusammenstecken dieser beiden Halbprofilscheiben den Grundkörper zu erhalten. Hierbei justieren und fixieren sich die Hohlkassetten 1 untereinander selbst.

Der stoffschlüssige Verbund sämtlicher Hohlkassetten 1 untereinander läßt sich schließlich einfach durch Aushärten von am "gesteckten" Radscheiben-Grundkörper in die Verbindungsfugen zwischen den Hohlkassetten 1 eingebrachten Klebstoff erreichen. Dabei wird das Einbringen von ausreichender Klebstoffmasse erleichtert, wenn die der Innenfläche der jeweiligen Kassettenöffnung 1.1 zugeordnete Oberfläche der Profileinengung 1.2 oder diese Innenfläche mit (nicht dargestellten) Distanznoppen versehen ist.

Selbstverständlich kann ein aus den Hohlkassetten aufgebauter, ringsum geschlossener Radscheiben-Grundkörper auch durch ein übliches anschließendes Faserwickelverfahren mit einem Deckschichtlaminat versehen werden. Die Herstellung der einzelnen Hohlkassette 1 ist ebenfalls mit bekannter Fertigungstechnik möglich, wie Zuschneiden von Prepregs, welche in eine Preßform aus Matrize und Patrize eingelegt, verpreßt und ausgehärtet werden. Sogar eine Herstellung durch Spritzgießen von kurzfaserverstärkten Thermoplasten ist möglich. .

## Patentansprüche

1. Hohlkassette (1) aus Kunststoff für einen Faserverbundaufbau einer einen Radreifen mit einer Radnabe verbindenden Radscheibe, insbesondere eines Schienenrades, wobei in Scheibenumfangsrichtung mehrere Hohlkassetten (1) aneinandergereiht sind, welche jeweils die Form eines Kreissektors der Radscheibe aufweisen, **dadurch gekennzeichnet,** daß die Hohlkassette (1) eine mit den beiderseits anschließenden baugleichen Hohlkassetten (1) formstabil zusammensteckbare Struktureinheit ist, welche an ihrer einen Anschlußseite offen ausgebildet und an ihrer anderen geschlossenen Anschlußseite mit einer in diese Kassettenöffnung (1.1) formschlüssig passenden Profileinengung (1.2) versehen ist.

2. Hohlkassette nach Anspruch 1, **dadurch gekennzeichnet,** daß die der Innenfläche der Kassettenöffnung (1.1) jeweils zugeordnete Oberfläche der Profileinengung (1.2) oder diese Innenfläche mit Distanznoppen versehen ist.

## Claims

1. A plastics hollow cartridge (1) for a fibre-composite structure of a wheel disc connecting a tyre to a wheel hub, in particular a wheel disc of a rail wheel, wherein a plurality of hollow cartridges (1), each in the shape of a circular sector of the wheel disc, are arranged side by side in the circumferential direction thereof, characterised in that the hollow cartridge (1) is a structural unit which can be rigidly fitted together with the adjacent hollow cartridges (1) of like construction on either side and which is open at one connecting end and, at its other, closed connecting end, is provided with a narrowed portion (1.2) fitting positively into the cartridge opening (1.1).

2. A hollow cartridge according to claim 1, characterised in that the outer surface of the narrowed portion (1.2), in each case associated with the inner surface of the cartridge opening (1.1), or this inner surface is provided with spacing projections.

## Revendications

1. Caisson creux (1) en matière plastique pour une construction composite renforcée par des fibres, d'une roue avec un moyeu relié au voile de la roue, notamment une roue de véhicule ferroviaire, en juxtaposant dans la direction périphérique du voile plusieurs caissons creux (1) qui ont chaque fois la forme d'un secteur de cercle du voile de roue,
caractérisé en ce que
le caisson creux (1) est une unité de structure pouvant être assemblée par emmanchement de manière stable grâce à des ouvertures (1.1, 1.2) en forme de caissons creux (1) s'emboîtant de façon identique des deux côtés, avec une ouverture sur un côté de raccordement et l'autre côté de raccordement étant fermé par un rétrécissement de profil (1.2) adapté pour une liaison de forme dans l'ouverture de caisson (1.1).

2. Caisson creux selon la revendication 1,
caractérisé en ce que
la surface du rétrécissement de profil (1.2) associée chaque fois à la surface intérieure de l'ouverture de caisson (1.1), ou cette surface intérieure, est munie de bossages d'écartement.
